# EUROPEAN PATENT SPECIFICATION

(11) **EP 2 956 296 B1**
(45) Date of publication and mention of the grant of the patent: **14.06.2017**
(21) Application number: 14705976.0
(22) Date of filing: 12.02.2014
(51) Int. Cl.: B32B 15/01, B32B 15/20, C23C 2/02, C23C 2/06, C23C 2/40, C25D 3/20, C25D 3/38, C22C 38/02, C22C 38/04, C22C 38/06, C22C 38/16, C22C 38/32, C22C 38/38, C23C 28/00

(54) **COATED STEEL SUITABLE FOR HOT-DIP GALVANISING**
BESCHICHTETER STAHL, DER FÜR FEUERVERZINKUNG
ACIER REVÊTU CONVENANT POUR GALVANISATION À CHAUD

(30) Priority: 12.02.2013 EP 13000713
(43) Date of publication of application: 23.12.2015
(73) Proprietor: Tata Steel IJmuiden BV, NL-1951 JZ VELSEN-NOORD (NL)
(72) Inventor: BLEEKER, Robert, NL-1951 JZ Velsen-Noord (NL); ZUIJDERWIJK, Marga Josina, NL-1951 JZ Velsen-Noord (NL)
(74) Representative: Kruit, Jan
(86) International application number: PCT/EP2014/000380
(87) International publication number: WO 2014/124749

(56) References cited:
- JP-A- 2004 124 187
- JP-A- 2005 240 080
- US-A1- 2009 162 691
- US-A1- 2012 100 391

## Description

The invention relates to a coated steel substrate suitable for hot-dip galvanising and to a method for manufacturing the same.

High strength steels such as dual phase (DP) steels, advanced high strength steels (AHSS) or Ultra high strength steels (UHSS) are characterised by having a very high yield point and a high elongation capacity. For this reason, the use of such steels in the manufacture of motor vehicles has increased in recent years in response to the demands placed on the automotive industry to reduce the weight of motor vehicles without sacrificing passenger safety.

In order to protect such high strength steels from corrosion, a zinc or zinc alloy coating is normally applied by hot-dip galvanising. Since high strength steels normally contain a high content of alloying elements, e.g. Al, Si, Cr and Mn, metal oxides are known to form at the steel surface during an annealing treatment that precedes hot-dip galvanising. Unfortunately, these metal oxides reduce zinc wetting and/or zinc adhesion to an extent that the quality of the galvanised coating obtained is of an unacceptable level.

One approach to reducing the formation of metal oxides at the steel surface is to control the atmosphere in the annealing furnace. This may be achieved by first controlling the atmosphere within a direct fire furnace (DFF) in order to obtain an iron oxide layer adjacent to the steel surface that is capable of inhibiting segregation of the alloying elements. The iron oxide layer may then be reduced in a radiant tube furnace (RTF) to promote the formation of a metallic iron layer that is substantially free of metal oxides, and which exhibits improved zinc wetting and/or zinc adhesion properties. However, this process is difficult to implement and the success of the process is largely dependent on the type of high strength steel that is used.

Another approach is to pickle the annealed steel to remove the metal oxides before hot-dip galvanising. This generally involves the steps of immersing the steel in an acidic pickling solution and thereafter heating the pickled steel to a temperature just above the temperature of the zinc bath. The pickled and heated steel is then hot-dip galvanised. Although this approach generally results in a galvanised coating of an acceptable quality level, this 'heat-to-coat' process is laborious and costly.

A further approach to reducing the occurrence of metal oxides at the steel surface is to electrolytically apply a thin (flash) layer of Fe adjacent to the high strength steel before annealing. This approach has shown to reduce the occurrence of Mn, Al and Si oxides at the steel surface but only when the Fe flash layer is applied as a thick layer, making this approach prohibitively expensive. Moreover, this approach is not suitable for preventing metal oxides forming on all high strength steel types. Fe flash layers are less suitable for reducing the occurrence of Mn oxides at the steel surface.

It is also known to provide copper flash layers on high strength steels to reduce Al, Mn and Si segregation, but this approach has the disadvantage that copper may dissolve in the zinc bath. This not only leads to contamination of the bath itself but copper may also hinder the formation of an Fe-Al intermetallic layer that is formed during hot-dip galvanising, and which is normally needed to obtain good zinc adhesion. Furthermore, it is known that copper flash layers that are annealed prior to hot-dip galvanisng exhibit poor zinc wetting. Document US 2012/100391 A1 discloses hot-dip galvanised high-resistance steels.

It is an object of the invention to provide a coated steel that prevents or at least reduces the dissolution of metallic flash layers such as copper during hot-dip galvanising

It is another object of the invention to provide a coated steel for preventing or at least reducing the segregation of alloying elements during hot-dip galvanising.

It is still another object of the invention to provide a hot-dip galvanised steel substrate having improved weldability properties.

It is a further object of the invention to prevent or at least reduce the extent of contamination of a galvanising bath during the hot-dip galvanising of coated steel substrates.

It is also an object of the invention to provide a coated steel that exhibits improved zinc wetting during hot-dip galvanisng.

One or more of these objects are reached according to a first aspect of the invention in which there is provided a coated steel substrate suitable for hot-dip galvanising, which comprises a steel strip, sheet or blank substrate containing one or more of Al, Si, Cr and Mn as alloying elements and a metallic flash layer thereon, characterised in that the metallic flash layer comprises:
- a first flash layer adjacent to the steel substrate for reducing segregation of the alloying elements, the first flash layer comprising Cu as the main constituent and
- a second flash layer for retaining the first flash layer during hot-dip galvanising, the second flash layer containing Fe as the main constituent.

It has been found that the coated steel substrate of the invention is very suitable for hot-dip galvanising since the presence of the first flash layer reduces the surface segregation of alloying elements in the steel that reduces zinc wetting and/or zinc adhesion, whereas the second flash layer enables improved retainment of the first flash layer such that contamination of the bath of molten zinc with one or more metals from the first flash layer may be reduced.. Good zinc wetting is also obtained. The contribution of the second flash layer in reducing oxide segregation is only marginal.

When the coated steel substrate comprises only the second flash layer e.g. an Fe flash layer, oxides that are formed after annealing on the Fe flash layer or at the steel substrate surface are not removed during hot-dip galvanising, which results in reduced zinc wetting and/or adhesion. When the first flash layer, e.g. a Cu flash layer, is provided adjacent to the steel substrate surface, oxides are still formed on the Fe flash layer but not as a homogeneous layer. Thus, during hot-dip galvanising molten zinc reacts with Cu by diffusing through the non-oxidised portions of the Fe-flash layer. Molten zinc also reacts with Cu by diffusing through the pores of the Fe-flash layer at regions where the extent of oxidation at the Fe flash layer surface is low. As a consequence, the Fe flash layer and the oxides thereon will be taken up as small particles in the zinc coating, which enables Fe in the steel to react with Al in zinc to provide an inhibition layer comprising Fe and Al having very good zinc wetting and/or zinc adhesion properties.

In a preferred embodiment the first flash layer comprises Cu as the main constituent. It has been found that the first flash layer is particularly effective at reducing the surface segregation of Al and Si when the first flash layer comprises Cu as a main constituent. The term main constituent means a flash layer having a content of more than 50 wt% of a metal e.g. Cu or Fe. It has also been found that the second flash layer reduces the dissolution of Cu into zinc, which has been attributed to iron in the second flash layer inhibiting the rate of reaction between Cu and zinc in the zinc bath. This has the advantage that the first flash layer is retained to a greater extent. The second flash layer also results in good zinc wetting.

Preferably the first flash layer contains at least 90 wt% Cu.

In a preferred embodiment the first flash layer consists of Cu. When the first flash layer consists of Cu, the surface segregation of Al and Si is reduced still further relative to first flash layers that contain copper and another metal.

In a preferred embodiment the second flash layer is provided adjacent to the first flash layer. Preferably the second flash layer consists of Fe.

In a preferred embodiment the first flash layer has a coating weight between 0.5 and 6.0 g/m². First flash layers having a coating weight of less than 0.5 g/m² were found to be less effective at preventing the surface segregation of alloying elements such as Al, Si, Cr and Mn, whereas a first flash layer coating weight above 6.0 g/m² is less preferred in view of the additional costs involved in producing such layers. Preferably the first flash layer has a coating weight between 1.0 and 3.0 g/m².

In a preferred embodiment the second flash layer has a coating weight between 1.0 and 6.0 g/m². It was found that a second flash layer coating weight of less than 1.0 g/m² was less suitable for retaining the first flash layer, particularly when the first flash layer comprised or consisted of Cu. It is preferred not to exceed a second flash layer coating weight of 6.0 g/m² otherwise the costs associated with providing such layers are too high. Preferably the first flash layer has a coating weight between 1.0 and 3.0 g/m².

In a preferred embodiment of the invention the steel substrate is selected from dual phase (DP) steel, transformation induced plasticity (TRIP) steel, TRIP assisted dual phase (TADP) steel, Twinning induced plasticity (TWIP), electrical steel and boron steel substrates.

In a preferred embodiment the steel substrate contains in weight%: 0.01-1 % C, 0.15-15 % Mn, 0.005-3.5 % Si, 0.01-2 % Al, 0.01-2 % Cr, 0.01-0.5 % Mo, 5 to 1000 ppm N, at most 0.1 % P, at most 0.15 % S, optionally one or more of 0.01-0.1% Nb, 0.002-0.15 % Ti, 0.02-0.2 % V, 0.1-60 ppm B, the balance being iron and inevitable impurities. Such a steel substrate is suitable for flash coating.

In an embodiment of the invention the steel substrate contains at least 1.0 wt% Si, preferably between 1.0 and 2.0 wt% Si.

In another embodiment of the invention the steel substrate contains at least 10 wt% Mn, preferably between 12 and 15 wt% Mn.

In a preferred embodiment of the invention the steel substrate contains 0.01-2 wt% Al.

In a preferred embodiment the steel substrate is in full-hard condition.

In a preferred embodiment the coated steel substrate further comprises a galvanised or galvannealed coating. The zinc or zinc alloy coating provided by hot-dip galvanising or by galvannealing protects the steel substrate from corrosion during storage and/or subsequent use. Such galvanised or galvannealed steel substrates also exhibit improved weldability properties relative to galvanised or galvannealed steel substrates without the first flash layer. For first flash layers containing Cu, the improvement in weldability is attributed to a Cu containing FeAl intermetallic layer that is formed at the steel surface, which extends the life of the electrode and promotes better heat transfer. This reduces the negative effect of zinc particles on electrode degradation.

In a preferred embodiment the galvanised or galvannealed coating comprises a zinc alloy, the zinc alloy comprising 0.3 -6 wt% Al and 0.3 - 5 wt% Mg, the remainder being zinc and unavoidable impurities. It was found that such coatings exhibit very good corrosion protection properties and are compatible with the flash coated steel substrate. The addition of aluminium and magnesium also improves the hardness of the galvanised coating, meaning better anti-galling properties and therefore less tool pollution.

Preferably the zinc alloy coating comprises 1.0 -3.5 wt% Al and 1.0 - 3.5 wt% Mg. Such coatings exhibit good compatibility with the flash coated substrate. These amounts also result in a zinc alloy coating that exhibits good corrosion resistance and weldability. By providing a zinc alloy coating that comprises 1.4 -2.2 wt% Al and 1.4 - 2.2 wt% Mg, good corrosion protection is obtained while the weldability of the zinc alloy coating may be improved. Moreover, such coatings are less expensive to manufacture.

The Zn-Al-Mg zinc alloy coating may also comprise one or more additional elements selected from the group consisting of Pb, Sb, Ti, Ca, Mn, Sn, La, Ce, Cr, Ni, Zr, Bi, Si, and Fe. Preferably the total amount of the additional elements is at most 0.2 wt%.

According to a second aspect of the invention there is provided a method for manufacturing a coated steel substrate, which comprises the steps of providing a steel strip, sheet or blank substrate containing one or more of Al, Si, Cr and Mn as alloying elements and providing a metallic flash layer thereon, wherein the metallic flash layer is provided by:
- depositing a first metallic flash layer adjacent to the steel substrate for reducing segregation of the alloying elements, the first metallic flash layer comprising Cu as the main constituent and
- depositing a second metallic flash layer for retaining the first metallic flash layer during hot-dip galvanising, the second metallic flash layer containing Fe as the main constituent.

Preferably the first metallic flash layer and/or the second metallic flash layer are deposited using electrolytic deposition since such layers exhibit very good adhesion and low porosity making them suitable substrates for subsequent processing steps.

In a preferred embodiment the first metallic flash layer and/or the second metallic flash layer are deposited using electroless deposition techniques such as physical vapour deposition or chemical vapour deposition. The use of electroless deposition techniques instead of electrolytic deposition results in a less expensive manufacturing process. It is also possible to provide the first flash layer by dipping but this generally results in thicker coatings that are less preferred.

In a preferred embodiment the method comprises the further step of hot-dip galvanising or galvannealing the flash coated steel substrate. Preferably, the flash coated steel substrate is provided with a zinc alloy hot-dip coating, more preferably a zinc alloy coating that comprises 0.3 -6 wt% Al and 0.3 - 5 wt% Mg, the remainder being zinc and unavoidable impurities.

### EXAMPLES

The invention shall now be elucidated by way of example. These examples are intended to enable those skilled in the art to practice the invention and do not in any way limit the scope of the invention as defined by the claims.

### Example 1: Steel Composition

A variety of steels having a high content of alloying elements were hot-dip galvanised. These steels and their compositions are shown in Table 1 below.

**Table1: Steel compositions**

| | Element (wt%) | | | | | | | | |
|---|---|---|---|---|---|---|---|---|---|
| Steel | C | Mn | Si | Al | Cr | Cu | Ni | Ti | B |
| Electrical | 0.07 | 0.26 | 3.2 | 0.02 | 0.02 | 0.16 | 0.05 | 0.03 | - |
| TWIP | 0.4 | 14 | 0.25 | 1.9 | 0.1 | 0.04 | 0.08 | - | - |
| Boron | 0.1 | 0.06 | 1.2 | 0.06 | 0.3 | 0.05 | - | - | 0.003 |

### Example 2: Preparation of a coated steel comprising an electroless Cu flash layer and an electrolytic Fe flash layer thereon.

A steel substrate having a high content of alloying elements (see Table 1) was provided and subsequently immersed in an acidic pickling solution for 15 seconds at 80 °C. To apply the Cu flash layer, the pickled steel was rinsed with demi-water and then dipped in a CuSO₄.5H₂O solution (25 g/l; pH2) at room temperature and pressure. Finally, the Cu flash coated steel was rinsed with ethanol and dried using hot-air. To apply the electrolytic Fe flash layer, ,the Cu flash coated steel was dipped in a H₂SO₄ solution (98%, 50 g/l), rinsed with demi-water and then immersed in a FeSO₄.7H₂O solution (240 g/l; pH3; 50°C). A current density of 500 A/dm² was applied for 7 or 21 seconds to provide a 1 or 3 g/m² electrolytic Fe flash layer respectively. Finally, the coated steel was rinsed with ethanol and dried using hot air.

### Example 3: Preparation of a coated steel comprising an electrolytic Cu flash layer and an electrolytic Fe flash layer thereon.

A steel substrate having a high content of alloying elements was dipped in a H₂SO₄ solution (98%, 50 g/l), rinsed with demi-water and then immersed in a CuSO₄.5H₂O solution (190 g/l) containing 80 g/l H₂SO₄ (98%). A current density of 500 A/dm² was applied for 6 or 18 seconds to provide a 1 or 3 g/m² electrolytically applied Cu flash layer on the steel substrate respectively. This substrate was rinsed with demi-water and then immersed in a FeSO₄.7H₂O solution (240 g/l; pH3; 50°C). A current density of 500 A/dm² was applied for 7 or 21 seconds to provide a 1 or 3 g/m² electrolytically applied Fe flash layer respectively on the Cu flash layer. Finally, the coated steel was rinsed with ethanol and dried using hot air.

### Example 4: Hot-dip galvanising

To provide a hot-dip galvanised coating on the flash coated steel substrate according to example 2 or example 3, the flash coated steel substrate was subjected to the following treatment:
Step 1: The flash coated steel substrate was heated from RT to 670° C in 168 seconds in HNX atmosphere containing 83% N₂ and 7% H₂ gas;
Step 2: in 67 seconds the flash coated steel substrate was heated from 670° C to 820° C in the same atmosphere;
Step 3: in 48 seconds the flash coated steel substrate was cooled from 820° C to 680° C in the same atmosphere as in step 3;
Step 4: in 55 seconds the flash coated steel substrate was cooled from 680° C to the strip entry temperature (SET), usually 465° C, in the same atmosphere as in step 1;
Step 5: dipping the flash coated steel substrate in a liquid zinc alloy containing 1.6 wt% Mg, 1.6 wt% Al and zinc, usually at 460° C for 2 seconds, and wiping the zinc layer on the steel panel with 100% N₂ to regulate the coating weight;
Step 6: cooling the galvanised steel substrate in 60 seconds to 80° C in 100% N₂.

The thickness of the galvanised coating was between 5 and 10 µm.

### Example 5: GDOES Analysis

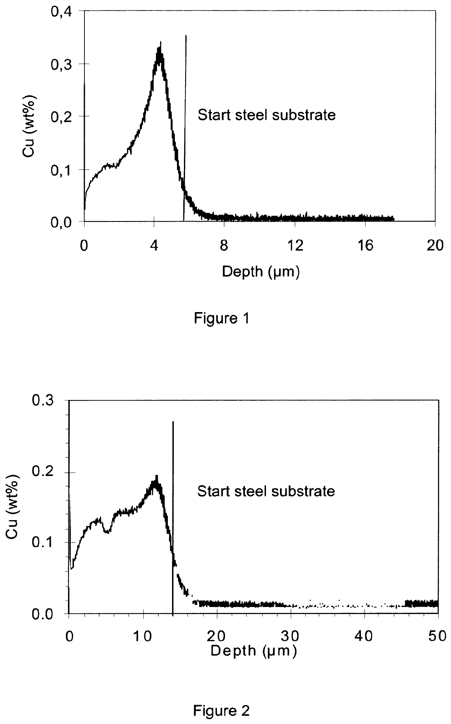

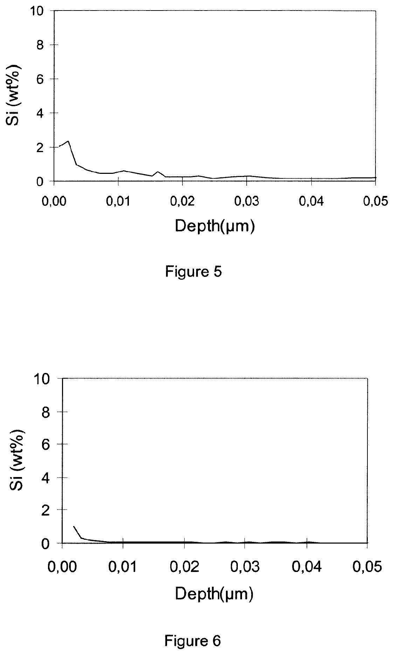

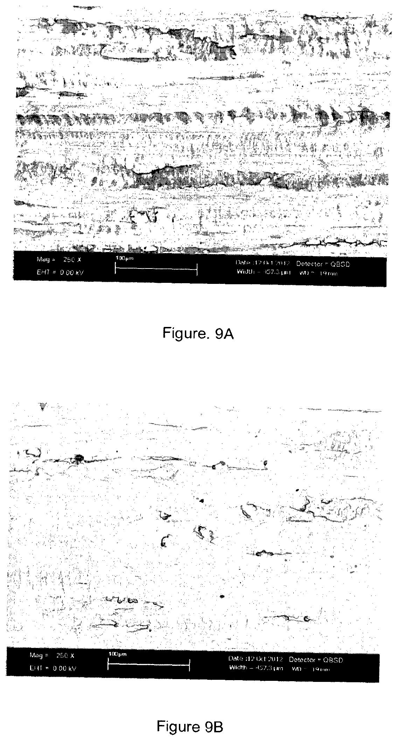

Glow discharge optical emission spectroscopy (GDOES) was used to analyse the flash treated steel substrates in order to investigate the chemical composition of the applied flash layers as a function of coating layer thickness after hot-dip galvanising (Figures 1-4) and after annealing (Figures 5-8). The substrates were analysed using a JY 5000 RF glow discharge spectrometer (30 W, 3.0 mbar).
Figure 1 shows the GDOES Cu profile of a flash treated boron steel after hot-dip galvanising. In this example a Cu flash layer (3 g/m²) was provided on the boron steel and a Fe flash layer (3 g/m²) was provided on the Cu flash layer. The Cu flash layer was provided by electroless deposition, whereas the Fe flash layer was provided by electrolytic deposition. From Figure 1 it can be seen that ~ 0.35 wt% of Cu remains in the Cu flash layer after hot-dip galvanising and that the Fe flash layer is very suitable for retaining Cu in the Cu flash layer.
Figure 2 shows the GDOES Cu profile of a flash treated boron steel after hot-dip galvanising. In this example a Cu flash layer (1 g/m²) was provided on a boron steel using an electroless deposition technique and thereafter provided with a Fe flash layer (3 g/m²) by electrolytic deposition. From Figure 2, it can be seen that ~ 0.2 wt% of Cu remains in the Cu flash layer after hot-dip galvanising.

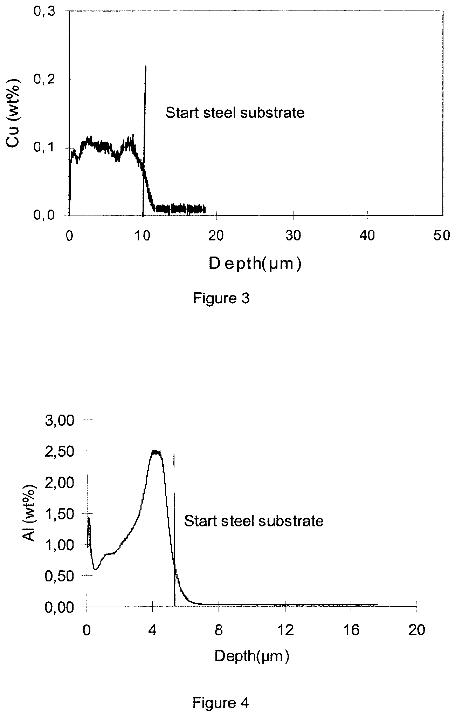

Figure 3 shows the GDOES Cu profile of a Cu flash treated boron steel after hot-dip galvanising. In this example the Cu flash layer (1 g/m²) was provided on the boron steel using an electroless deposition technique. From Figure 3 it can be seen that ∼ 0.1 wt% of Cu remains in the Cu flash layer after hot-dip galvanising.
   The results shown in Figure 1 and 2 demonstrate the beneficial effect of providing the Fe flash layer on the Cu flash layer in reducing the dissolution of Cu into zinc and the uptake of Cu in the zinc bath.
Figure 4 shows a GDOES Al profile of a flash treated boron steel after hot-dip galvanising. In this example the boron steel is provided with a Cu flash layer (3 g/m²) and a Fe flash layer (3 g/m²) thereon. Both the Cu and Fe flash layers were provided by electrolytic deposition. From Figure 4 it can be seen that some Cu is taken up in the Al rich inhibition layer that forms at the steel surface during hot-dip galvanising. As a consequence, the electrical resistance of the Fe-Al inhibition layer during welding is reduced. A reduction in the electrical resistance has the effect of reducing the amount of heat that accumulates at the steel surface during welding. Moreover, by reducing heat accumulation, the rate at which the electrode is reduced decreases due to a decrease in the rate of reaction between the electrode and zinc that remains in the inhibition layer.
Figure 5 shows a GDOES Si profile of a flash treated electrical steel after annealing. In this example the electrical steel, containing 3.2 wt% Si, is provided with an electroless Cu flash layer (1 g/m²) and an electrolytic Fe flash layer (3 g/m²) thereon. From Figure 5 it can be seen that the combination of the Cu flash layer and the Fe flash layer is particularly effective at reducing Si segregation during annealing. (~2 wt% Si). Similarly, Figure 6 shows the GDOES Si profile of a flash treated electrical steel comprising an electrolytically applied Cu flash layer (3 g/m²) and an electrolytically applied Fe flash layer (3 g/m²). The flash treated steel of Figure 6 is also very effective at reducing Si segregation during annealing (~ 1 wt% Si).
   A comparison of Figure 6 and Figure 5 shows that the treated electrical steel of Figure 6, having a thicker (3 g/m²), electrolytically applied Cu flash layer, exhibits a further reduction in Si segregation relative to the treated steel of Figure 5 having a thinner (1 g/m²) Cu flash layer that was applied using an electroless deposition technique. The further reduction in Si segregation is understood to be largely due to the more homogenous nature of the electrolytically applied Cu flash layer relative to the more porous Cu flash layer that is obtained when using electroless deposition techniques as shown by Figures 9A and 9B.

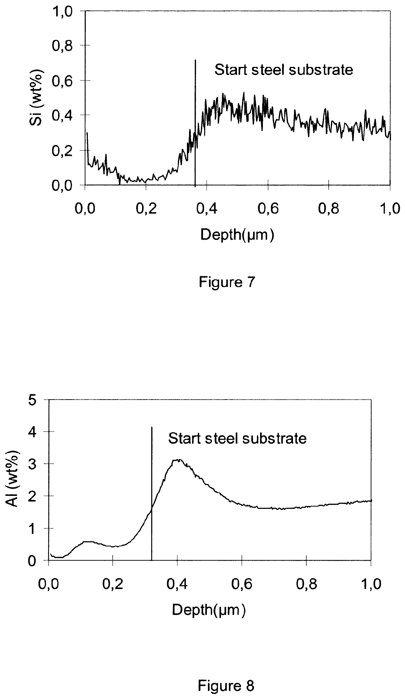

Figure 7 and Figure 8 show Si and Al GDOES profiles respectively for flash treated TWIP steels containing 0,25% Si and 1.9% Al. For both examples, the Cu flash layer (1 g/m²) was provided using electroless deposition, whereas the Fe flash layer (1 g/m²) was provided using an electrolytic deposition technique. Both Figure 7 and Figure 8 show that the Cu/Fe flash treated steel is very suitable for reducing Si and Al segregation, even when the flash layers are characterised by relatively low coating weights e.g. (1 g/m²).
Figures 9A and 9B show material contrast photographs of a Cu flash layer that was deposited using an electroless deposition technique on electrical steel (9A) and a Cu flash layer that was deposited on electrical steel by electrolytic deposition (9B). The photographs show that the flash Cu flash layer deposited by electrolytic deposition has less uncovered surface relative to the Cu flash layer provided by electroless deposition.

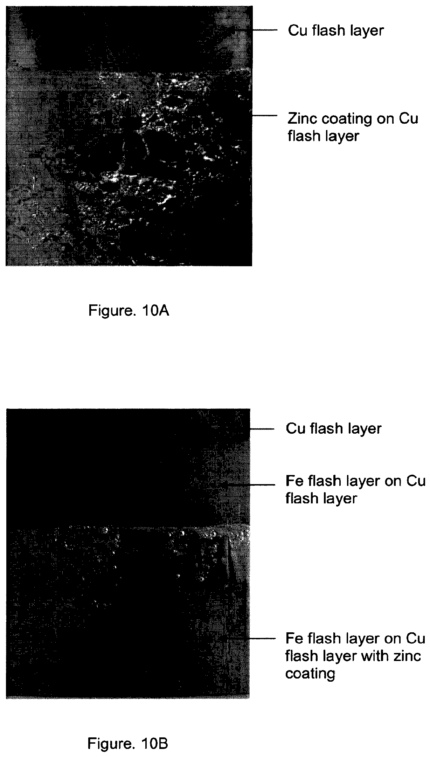

Figure 10A and 10B show respectively the zinc wetting of electroless Cu (1 g/m²) plated electrical steel and of electroless Cu (1 g/m²) electrical steel that was additionally treated with a Fe flash (3 g/m²) layer. It can be seen from Figure 10A and 10B that poor zinc wetting is observed when zinc is provided on a Cu flash layer. In contrast, Figure 10 B shows that good zinc wetting is observed when zinc is provided on a flash treated substrate comprising both the Cu flash layer and the Fe flash layer.

## Claims

1. A coated steel substrate for hot-dip galvanising, which comprises a steel strip, sheet or blank substrate containing one or more of Al, Si, Cr and Mn as alloying elements and a metallic flash layer thereon, wherein the metallic flash layer comprises:
- a first flash layer adjacent to the steel substrate for reducing segregation of the alloying elements, the first flash layer comprising Cu as the main constituent, and
- a second flash layer for retaining the first flash layer during hot-dip galvanising, the second flash layer containing Fe as the main constituent.

2. Coated steel substrate according to claim 1 or claim 2, wherein the first flash layer consists of Cu.

3. Coated steel substrate according to any one of claims 1-3, wherein the first flash layer has a coating weight of between 0.5 and 6.0 g/m², preferably between 1.0 and 3.0 g/m².

4. Coated steel substrate according to any one of the preceding claims, wherein the second flash layer has a coating weight of between 1.0 and 6.0 g/m², preferably between 1.0 and 3.0 g/m².

5. Coated steel substrate according to any one of the preceding claims, wherein the steel substrate contains at least 1 wt% of Si.

6. Coated steel substrate according to any one of claims 1-5, wherein the steel substrate contains at least 10 wt% of Mn.

7. Coated steel substrate according to any one of the preceding claims, wherein the steel substrate contains in weight%: 0.01-1 % C, 0.15-15 % Mn, 0.005-3.5 % Si, 0.01-2 % Al, 0.01-2 % Cr, 0.01-0.5 % Mo, 5 to 1.000 ppm N, at most 0.1 % P, at most 0.15 % S, optionally one or more of 0.01-0.1% Nb, 0.002-0.15 % Ti, 0.02-0.2 % V, 0.1-60 ppm B, the balance being iron and inevitable impurities.

8. Coated steel substrate according to any one of the preceding claims, wherein the steel substrate is in full-hard condition.

9. Coated steel substrate according to any one of the preceding claims, wherein the coated steel substrate further comprises a galvanised or galvannealed coating.

10. Coated steel substrate according to claim 9, wherein the galvanised or galvannealed coating comprises a zinc alloy, the zinc alloy comprising 0.3 -6 wt% Al and 0.3 - 5 wt% Mg, the remainder being zinc and unavoidable impurities.

11. Method for manufacturing a coated steel substrate, which comprises the steps of providing a steel strip, sheet or blank substrate containing one or more of Al, Si, Cr and Mn as alloying elements and providing a metallic flash layer thereon, wherein the metallic flash layer is provided by:
- depositing a first metallic flash layer adjacent to the steel substrate for reducing segregation of the alloying elements, the first flash layer comprising Cu as the main constituent, and
- depositing a second metallic flash layer for retaining the first metallic flash layer during hot-dip galvanising, the second metallic flash layer containing Fe as the main constituent.

12. Method according to claim 11, wherein the first metallic flash layer and/or the second metallic flash layer are deposited using electrolytic deposition.

13. Method according to claim 11 or claim 12, wherein the first metallic flash layer and/or the second metallic flash layer are deposited using electroless deposition techniques such as physical vapour deposition or chemical vapour deposition.

14. Method according to any one of claims 11-13, which comprises the further step of hot-dip galvanising or galvannealing the coated steel substrate.

## Patentansprüche

1. Beschichtetes Stahlsubstrat zum Feuerverzinken, das ein Streifen-, Platten- oder Rohlingsubstrat aus Stahl umfasst, das eines oder mehrere von Al, Si, Cr und Mn als Legierungselemente und eine metallische Trennschicht darauf enthält, wobei die metallische Trennschicht umfasst:
- eine erste Trennschicht, anliegend am Stahlsubstrat zum Reduzieren einer Segregation der Legierungselemente, die erste Trennschicht umfassend Cu als den Hauptbestandteil, and
- eine zweite Trennschicht zum Zurückhalten der ersten Trennschicht während des Feuerverzinkens, die zweite Trennschicht enthaltend Fe als den Hauptbestandteil.

2. Beschichtetes Stahlsubstrat nach Anspruch 1 oder Anspruch 2, wobei die erste Trennschicht aus Cu besteht.

3. Beschichtetes Stahlsubstrat nach einem der Ansprüche 1-3, wobei die erste Trennschicht ein Beschichtungsgewicht zwischen 0,5 und 6,0 g/m², vorzugsweise zwischen 1,0 und 3,0 g/m² hat.

4. Beschichtetes Stahlsubstrat nach einem der vorherigen Ansprüche, wobei die zweite Trennschicht ein Beschichtungsgewicht zwischen 1,0 and 6,0 g/m², vorzugsweise zwischen 1,0 and 3,0 g/m² hat.

5. Beschichtetes Stahlsubstrat nach einem der vorherigen Ansprüche, wobei das Stahlsubstrat mindestens 1 Gew.-% Si enthält.

6. Beschichtetes Stahlsubstrat nach einem der Ansprüche 1-5, wobei das Stahlsubstrat mindestens 10 Gew.-% Mn enthält.

7. Beschichtetes Stahlsubstrat nach einem der vorherigen Ansprüche, wobei das Stahlsubstrat in Gew.-% Folgendes enthält. 0,01-1 % C, 0,15-15 % Mn, 0,005-3,5 % Si, 0,01-2 % Al, 0,01-2 % Cr, 0,01-0,5 % Mo, 5 bis 1000 ppm N, höchstens 0,1 % P, höchstens 0,15 % S, optional eines oder mehrere von 0,01-0,1 % Nb, 0,002-0,15 % Ti, 0,02-0,2 % V, 0,1-60 ppm B, wobei der Rest Eisen und unvermeidbare Verunreinigungen sind.

8. Beschichtetes Stahlsubstrat nach einem der vorherigen Ansprüche, wobei das Stahlsubstrat in vollständig hartem Zustand ist.

9. Beschichtetes Stahlsubstrat nach einem der vorherigen Ansprüche, wobei das beschichtete Stahlsubstrat ferner eine galvanisierte oder galvannealte Beschichtung umfasst.

10. Beschichtetes Stahlsubstrat nach Anspruch 9, wobei die galvanisierte oder galvannealte Beschichtung eine Zinklegierung umfasst, die Zinklegierung umfassend 0,3-6 Gew.-% Al und 0,3-5 Gew.-% Mg, wobei der Rest Zink und unvermeidbare Verunreinigungen sind.

11. Verfahren zum Herstellen eines beschichteten Stahlsubstrats, das die Schritte eines Bereitstellens eines Streifen-, Platten- oder Rohlingsubstrats aus Stahl umfasst, das eines oder mehrere von Al, Si, Cr und Mn als Legierungselemente enthält und eine metallische Trennschicht darauf bereitstellt, wobei die metallische Trennschicht durch Folgendes bereitgestellt wird:
- Aufbringen einer ersten metallischen Trennschicht anliegend am Stahlsubstrat, um eine Segregation der Legierungselemente zu reduzieren, wobei die erste Trennschicht Cu als den Hauptbestandteil umfasst, und
- Aufbringen einer zweiten metallischen Trennschicht zum Zurückhalten der ersten metallischen Trennschicht während des Feuerverzinkens, wobei die zweite metallische Trennschicht Fe als den Hauptbestandteil enthält.

12. Verfahren nach Anspruch 11, wobei die erste metallische Trennschicht und/oder die zweite metallische Trennschicht unter Verwendung von elektrolytischer Deposition aufgebracht werden.

13. Verfahren nach Anspruch 11 oder Anspruch 12, wobei die erste metallische Trennschicht und/oder die zweite metallische Trennschicht unter Verwendung von stromlosen Depositionstechniken aufgebracht werden, wie z. B. physikalische Gasphasenabscheidung oder chemische Gasphasenabscheidung.

14. Verfahren nach einem der Ansprüche 11-13, das die weiteren Schritte des Feuerverzinkens oder Galvannealings des beschichteten Stahlsubstrats umfasst.

## Revendications

1. Substrat d'acier revêtu pour la galvanisation à chaud, comprenant un substrat en bande, tôle ou ébauche d'acier, comprenant un ou plusieurs des suivants : Al, Si, Cr et Mn, comme éléments d'alliage, et une couche flash métallique dessus, la couche flash métallique comprenant :
- une première couche flash adjacente au substrat d'acier pour réduire la ségrégation des éléments d'alliage, la première couche flash comprenant du Cu en tant que constituant principal, et
- une deuxième couche flash pour retenir la première couche flash au cours de la galvanisation à chaud, la deuxième couche flash comprenant du Fe en tant que constituant principal.

2. Substrat d'acier revêtu selon la revendication 1 ou la revendication 2, première couche flash comprenant du Cu.

3. Substrat d'acier revêtu selon une quelconque des revendications 1 à 3, la première couche flash présentant un poids de revêtement compris entre 0,5 et 6,0 g/m², de préférence entre 1,0 et 3,0 g/m².

4. Substrat d'acier revêtu selon une quelconque des revendications précédentes, la deuxième couche flash présentant un poids de revêtement compris entre 1,0 et 6,0 g/m², de préférence entre 1,0 et 3,0 g/m².

5. Substrat d'acier revêtu selon une quelconque des revendications précédentes, le substrat d'acier contenant au moins 1 % en poids de Si.

6. Substrat d'acier revêtu selon une quelconque des revendications 1 à 5, le substrat d'acier contenant au moins 10 % en poids de Mn.

7. Substrat d'acier revêtu selon une quelconque des revendications précédentes, le substrat d'acier contenant au moins, en poids, 0,01 à 1 % de C, 0,15 - 15 % de Mn, 0,005 à 3,5 % de Si, 0,01 à 2 % d'Al, 0,01 à 2 % de Cr, 0,01 à 0,5 % de Mo, 5 à 1,000 ppm N, au plus 0,1 % de P, au plus 0,15 % de S, en option un ou plusieurs des suivants : 0,01 - 0,1 % de Nb, 0,002 à 0,15 % de Ti, 0,02 à 0,2 % V, 0,1 à 60 ppm de B, le restant étant du fer et des impuretés inévitables.

8. Substrat d'acier revêtu selon une quelconque des revendications précédentes, le substrat d'acier étant à l'état dur.

9. Substrat d'acier revêtu selon une quelconque des revendications précédentes, le substrat d'acier revêtu comprenant en outre un revêtement galvanisé ou recuit après galvanisation.

10. Substrat d'acier revêtu selon la revendication 9, le revêtement galvanisé ou recuit après galvanisation comprenant un alliage de zinc, l'alliage de zinc comprenant de 0,3 à 6 % en poids d'Al et de 0,3 à 5 % en poids de Mg, le restant étant du zinc et des impuretés inévitables.

11. Méthode de fabrication d'un substrat d'acier revêtu, comprenant les étapes de fourniture d'un substrat de bande, tôle ou ébauche d'acier, comprenant un ou plusieurs des suivants : Al, Si, Cr et Mn, en tant qu'éléments d'alliage, et une couche flash métallique dessus, la couche flash métallique s'obtenant de la façon suivante :
- le dépôt d'une première couche flash métallique adjacente au substrat d'acier pour réduire la ségrégation des éléments d'alliage, la première couche flash comprenant du Cu en tant que constituant principal, et
- le dépôt d'une deuxième couche flash métallique pour retenir la première couche flash au cours de la galvanisation à chaud, la deuxième couche flash métallique comprenant du Fe en tant que constituant principal.

12. Méthode selon la revendication 11, le dépôt de la première couche flash métallique et/ou de la deuxième couche flash métallique s'effectuant par dépôt électrolytique.

13. Méthode selon la revendication 11 ou la revendication 12, la première couche flash métallique et/ou la deuxième couche flash métallique étant déposées à l'aide de techniques de dépôt auto-catalytique, par exemple le dépôt physique en phase vapeur ou le dépôt chimique en phase vapeur.

14. Méthode selon une quelconque des revendications 11 à 13, comprenant l'étape supplémentaire de la galvanisation à chaud ou du recuit après galvanisation du substrat d'acier revêtu.
